# EUROPEAN PATENT APPLICATION

(11) **EP 4 694 095 A1**
(43) Date of publication of application: **11.02.2026**
(21) Application number: 24847732.5
(22) Date of filing: 28.05.2024
(51) Int. Cl.: H04L 69/18, H04N 21/4363

(54) **GUIDING METHOD, AND DEVICE**

(30) Priority: 02.08.2023 CN 202310970257
(71) Applicant: Huawei Technologies Co., Ltd., Shenzhen, Guangdong 518129 (CN)
(72) Inventor: LIU, Zaiqun, Shenzhen, Guangdong 518129 (CN); LIU, Feng, Shenzhen, Guangdong 518129 (CN); HU, Shiyao, Shenzhen, Guangdong 518129 (CN)
(74) Representative: Epping - Hermann - Fischer
(86) International application number: PCT/CN2024/095803
(87) International publication number: WO 2025/025769

(57) **Abstract**

A guiding method and a device are disclosed. The method may be applied to a multi-device collaboration scenario, so that an available collaboration protocol can be selected from collaboration protocols supported by a plurality of devices, and then a user is guided to perform multi-device collaboration in a multi-device collaboration manner corresponding to the selected collaboration protocol, thereby reducing occurrence of a multi-device collaboration failure problem. In this method, a second device may receive a discovery packet sent by a first device, to obtain a collaboration protocol supported by the first device; and then select one or more collaboration protocols from the collaboration protocol supported by the first device and a collaboration protocol supported by the second device; and the second device may perform user guidance according to the selected one or more collaboration protocols, so that a user may be guided to perform multi-device collaboration in a collaboration manner corresponding to one of the selected collaboration protocols.

## Description

### CROSS-REFERENCE TO RELATED APPLICATIONS

This application claims priority to Chinese Patent Application No. 202310970257.9, filed with the China National Intellectual Property Administration on August 2, 2023 and entitled "GUIDING METHOD AND DEVICE", which is incorporated herein by reference in its entirety.

### TECHNICAL FIELD

Embodiments of this application relate to the field of terminal technologies, and in particular, to a guiding method and a device.

### BACKGROUND

In recent years, with rapid development of the electronics industry and communication technologies, there are more device forms, such as mobile phones, tablet computers, and smart televisions, and people's life becomes increasingly intelligent. In addition, as device types increase and device functions diversify, multi-device collaboration is expanding into increasingly diverse application scenarios.

However, because different devices have different ecosystems, operating system capabilities, or the like, there may be many problems in interconnection and interworking operations between the devices. For example, when a user wants to perform a cross-ecosystem or cross-operating system device operation, multi-device collaboration cannot be implemented or collaboration fails. For example, when a mobile phone and a television have different projection protocols, a user cannot perform projection or projection fails.

### SUMMARY

Embodiments of this application provide a guiding method and a device. In the method, a user may be guided to perform multi-device collaboration according to a collaboration protocol shared by a plurality of devices, or a user may be guided on how to perform multi-device collaboration in a collaboration manner corresponding to a selected collaboration protocol, thereby reducing occurrence of a multi-device collaboration failure, and further improving user experience.

According to a first aspect, a guiding method is provided. In the method, a second device receives a first packet sent by a first device, where the first packet indicates that the first device initiates multi-device collaboration according to a first protocol, the first packet includes a collaboration protocol supported by the first device, and the collaboration protocol supported by the first device includes the first protocol; the second device selects a second protocol from the collaboration protocol supported by the first device and a collaboration protocol supported by the second device; and the second device displays a guide interface, where the guide interface is used to guide a user to perform m operations, and performs multi-device collaboration between the first device and the second device through the m operations in a multi-device collaboration manner corresponding to the second protocol, where m is an integer greater than 0. The first device may be understood as an initiator of the multi-device collaboration, and the second device may be understood as a receiver of the multi-device collaboration. The first packet may be, for example, a discovery packet sent by the first device. The multi-device collaboration means that a plurality of devices implement collaborative processing in one service scenario. The multi-device collaboration includes but is not limited to a projection scenario, an audio projection scenario, a file sharing scenario, and the like. The multi-device collaboration is generally implemented according to a corresponding collaboration protocol, and different collaboration protocols may correspond to different multi-device collaboration manners. Multi-device collaboration projection is used as an example. There are a plurality of projection protocols that may be used for projection, for example, including but not limited to miracast (a wireless display standard based on Wi-Fi Direct), cast+ (a projection protocol), dmsdp (a projection protocol), google cast (a projection dedicated protocol), Lebocast^{®}, and AirPlay^{®} (a projection protocol).

In the method, a capability of receiving a discovery packet sent by the initiator is configured for the receiver, so that the receiver can receive a packet sent by the initiator, to learn, based on the discovery packet, an operation intention of multi-device collaboration initiated by the initiator. In addition, the receiver may further make a decision on a collaboration protocol for multi-device collaboration, select a collaboration protocol from at least one optional collaboration protocol, and perform user guidance based on a collaboration manner corresponding to the selected collaboration protocol, to guide the user to implement multi-device collaboration in the collaboration manner corresponding to the selected collaboration protocol. Therefore, in the method, cross-ecosystem or cross-operating system multi-device collaboration can be implemented without a binding relationship or pre-negotiation between a plurality of devices, thereby avoiding a multi-device collaboration failure or an inability to collaborate, for example, an inability to project or a projection failure.

In a possible implementation, that the second device displays the guide interface includes but is not limited to: displaying the guide interface in a sidebar, a notification bar, a full-screen interface, or the like.

In this implementation, the second device may provide the guide interface for the user by using a plurality of possible display methods. For example, the guide interface may be displayed to the user in a full-screen interface from a perspective of ease of viewing by the user. For another example, the guide interface may be displayed to the user in a sidebar, a notification bar, or the like from a perspective of reducing blocking of the display interface. Therefore, diversity of user guidance can be improved, and user experience can be ensured.

In a possible implementation, that the second device selects the second protocol from the collaboration protocol supported by the first device and the collaboration protocol supported by the second device includes: The second device selects the second protocol from one or more collaboration protocols supported by both the first device and the second device.

In this implementation, the second device selects the collaboration protocol from the collaboration protocols supported by both the two devices, to improve efficiency of switching between multi-device collaboration manners, and reduce user operations. For example, a multi-device collaboration manner selected by the user may be switched to the multi-device collaboration manner corresponding to the collaboration protocol selected by the second device through negotiation between the two devices, thereby implementing multi-device collaboration.

In a possible implementation, the second protocol is a collaboration protocol supported by the second device or a collaboration protocol not supported by the first device, and the guide interface is used to guide the user to perform the m operations on the first device.

In this implementation, different guide interfaces may be correspondingly displayed based on the collaboration protocol selected by the second device and capabilities supported by the two devices for the collaboration protocol. Therefore, accuracy of user guidance can be improved. For example, when the selected collaboration protocol is a collaboration protocol not supported by the first device, the user may be guided to perform a user operation on the first device, so that the first device can support the collaboration protocol.

In a possible implementation, the guide interface includes one or more of the following information: a two-dimensional code used to establish a communication connection between the first device and the second device, and an operation step performed by the user on the first device.

In this implementation, the guide interface is provided for the user, so that switching between multi-device collaboration manners can be implemented, to resolve a problem that collaboration cannot be implemented in the multi-device collaboration manner selected by the user.

In a possible implementation, the second protocol is a collaboration protocol supported by the first device or a collaboration protocol not supported by the second device, and the guide interface is used to guide the user to perform the m operations on the second device.

In this implementation, different guide interfaces may be correspondingly displayed based on the collaboration protocol selected by the second device and capabilities supported by the two devices for the collaboration protocol. Therefore, accuracy of user guidance can be improved. For example, when the selected collaboration protocol is a collaboration protocol not supported by the second device, the user may be further guided to perform a user operation on the second device, so that the second device can support the collaboration protocol.

In a possible implementation, the method further includes: The second device receives a second packet sent by the first device according to the second protocol, where the second packet includes multi-device collaboration data sent by the first device to the second device.

In this implementation, the second device may switch from the multi-device collaboration manner selected by the user to the multi-device collaboration manner selected by the second device, so that multi-device collaboration can be successfully implemented based on the switched multi-device collaboration manner, and a problem that multi-device collaboration cannot be implemented because of the multi-device collaboration manner selected by the user can be avoided.

In a possible implementation, that the second device receives the first packet sent by the first device includes: The second device receives, through a Bluetooth connection or a wireless fidelity (wireless fidelity, Wi-Fi) connection, the first packet sent by the first device.

In this implementation, a frequently used Bluetooth connection or Wi-Fi connection may be used, so that the second device has a capability of receiving a discovery packet sent by another device. In this way, the guiding method described in the foregoing implementations can be implemented, and a success probability of multi-device collaboration can be improved.

In a possible implementation, before the second device selects the second protocol from the collaboration protocol supported by the first device and the collaboration protocol supported by the second device, the method further includes: The second device determines that the second device does not support the first protocol; or the second device detects that multi-device collaboration performed with the first device according to the first protocol fails.

In this implementation, the second device detects multi-device collaboration performed with the first device according to the first protocol, and provides user guidance only when it is detected that the second device cannot perform multi-device protocol with the first device according to the first protocol. This avoids impact occurs when the second device and the first device can successfully collaborate according to the first protocol.

According to a second aspect, a guiding method is further provided. The method may be applied to a second device. In the method, the second device receives a first packet sent by a first device, where the first packet indicates that the first device initiates digital living network alliance (digital living network alliance, DLNA) projection; the second device displays a guide interface, where the guide interface is used to guide a user to turn on a hotspot of the first device; and the second device accesses the hotspot of the first device, and performs DLNA projection between the first device and the second device via the hotspot of the first device.

In the method, for a problem that a plurality of devices cannot discover each other in a DLNA projection scenario because a router restricts forwarding of a multicast packet, a capability of receiving a discovery packet sent by an initiator is configured by a receiver, so that the receiver can receive a packet sent by the initiator, to learn, based on the discovery packet, an operation intention of multi-device collaboration initiated by the initiator. In addition, the receiver may further guide the initiator to turn on a hotspot, so that forwarding by the router can be switched to constructing a local area network via the hotspot by the initiator, thereby ensuring successful projection.

According to a third aspect, a guiding method is provided. The method may be applied to the first device. In the method, a first device detects and responds to a user operation of triggering multi-device collaboration by a user, and sends a first packet, where the first packet indicates that the first device initiates multi-device collaboration according to a first protocol, the first packet includes a collaboration protocol supported by the first device, and the collaboration protocol supported by the first device includes the first protocol. For example, the first device may send the first packet in a unicast manner, a multicast manner, a broadcast manner, or the like.

The first device may receive a guide packet of a second device, where the guide packet may be used by the first device to perform multi-device collaboration with the second device in a multi-device collaboration manner corresponding to a second protocol. For example, the guide packet may indicate the first device to turn on a hotspot, download an application used for multi-device collaboration, or automatically trigger switching of the multi-device collaboration manner corresponding to the second protocol. This is not limited in this application.

Alternatively, the first device may further detect a user operation, for example, a code scanning operation, based on a guide interface displayed by the second device. The first packet may be, for example, a discovery packet.

In the method, the first device may be used as an initiator of multi-device collaboration, and may send a discovery packet in response to a user operation initiated by a user for multi-device collaboration, so that the second device can receive the packet sent by the first device, to learn an operation intention of multi-device collaboration initiated by the initiator, and the like. This further implements the guide method described in the first aspect and the implementations of the first aspect.

According to a fourth aspect, a guide system is provided. The system includes the second device described in the first aspect or the second aspect and the implementations of the first aspect or the second aspect and the first device described in the third aspect and the implementations of the third aspect. The second device may be configured to perform the method in the first aspect or the second aspect and the implementations of the first aspect or the second aspect. The first device may be configured to perform the method in the third aspect and the implementations of the third aspect.

According to a fifth aspect, a second device is provided. The second device includes a plurality of functional modules, and the plurality of functional modules interact with each other to implement the method performed by the second device in the first aspect and the implementations of the first aspect, or implement the method performed by the second device in the second aspect and the implementations of the second aspect. The plurality of functional modules may be implemented based on software, hardware, or a combination of software and hardware, and the plurality of functional modules may be randomly combined or divided based on specific implementation.

According to a sixth aspect, a first device is provided. The first device includes a plurality of functional modules, and the plurality of functional modules interact with each other to implement the method performed by the first device in the third aspect and the implementations of the third aspect. The plurality of functional modules may be implemented based on software, hardware, or a combination of software and hardware, and the plurality of functional modules may be randomly combined or divided based on specific implementation.

According to a seventh aspect, a second device is further provided, including at least one processor and at least one memory. The at least one memory stores a program, and when the second device runs, the at least one processor performs the method performed by the second device in the first aspect and the implementations of the first aspect, or performs the method performed by the second device in the second aspect and the implementations of the second aspect.

According to an eighth aspect, a first device is further provided, including at least one processor and at least one memory. The at least one memory stores a program, and when the first device runs, the at least one processor performs the method performed by the first device in the third aspect and the implementations of the third aspect.

According to a ninth aspect, a readable storage medium is provided. The readable storage medium stores instructions, and when the instructions are run on a second device, the second device is enabled to perform the method according to the first aspect and the possible implementations of the first aspect, or the method according to the second aspect and the possible implementations of the second aspect; or when the instructions are run on a first device, the first device is enabled to perform the method according to the third aspect and the possible implementations of the third aspect.

According to a tenth aspect, a program product is provided. When the program product runs on a second device, the second device is enabled to perform the method according to the first aspect and the possible implementations of the first aspect, or the method according to the second aspect and the possible implementations of the second aspect; or when the program product runs on a first device, the first device is enabled to perform the method according to the third aspect and the possible implementations of the third aspect.

According to an eleventh aspect, a chip is further provided. The chip is configured to read a program stored in a memory, and perform the method performed by the second device in the first aspect and the possible implementations of the first aspect, or perform the method performed by the second device in the second aspect and the possible implementations of the second aspect, or perform the method performed by the first device in the third aspect and the possible implementations of the third aspect.

According to a twelfth aspect, a chip system is further provided. The chip system includes a processor, configured to support a second device in implementing the method performed by the second device in the first aspect and the possible implementations of the first aspect, or configured to support a second device in implementing the method performed by the second device in the second aspect and the possible implementations of the second aspect, or configured to support a first device in implementing the method performed by the first device in the third aspect and the possible implementations of the third aspect. In a possible implementation, the chip system further includes a memory, and the memory is configured to store a program and data that are necessary for a device. The chip system may include a chip, or may include a chip and another discrete component.

For beneficial effects of any one of the second aspect to the twelfth aspect and the possible implementations of the second aspect to the twelfth aspect, refer to beneficial effects the possible implementations of the first aspect. Details are not described herein again.

### BRIEF DESCRIPTION OF DRAWINGS

FIG. 1 is a diagram of a possible hardware structure of a device according to an embodiment of this application;
FIG. 2 is a block diagram of a software system architecture of a device according to an embodiment of this application;
FIG. 3A and FIG. 3B are a diagram 1 of an application scenario of a guiding method according to an embodiment of this application;
FIG. 4 is a diagram 2 of an application scenario of a guiding method according to an embodiment of this application;
FIG. 5 is a diagram 3 of an application scenario of a guiding method according to an embodiment of this application;
FIG. 6 is a diagram 4 of an application scenario of a guiding method according to an embodiment of this application;
FIG. 7 is a diagram 5 of an application scenario of a guiding method according to an embodiment of this application;
FIG. 8 is a schematic flowchart 1 of a guiding method according to an embodiment of this application;
FIG. 9 is a schematic flowchart 2 of a guiding method according to an embodiment of this application; and
FIG. 10 is a schematic flowchart 3 of a guiding method according to an embodiment of this application.

### DESCRIPTION OF EMBODIMENTS

The following describes in detail embodiments of this application with reference to accompanying drawings.

Devices such as mobile phones, tablet computers, smart screens, and smart home devices are increasingly popular, and as device types gradually increase and device functions gradually diversify, multi-device collaboration is expanding into increasingly diverse application scenarios. Multi-device collaboration means that a plurality of devices implement collaborative processing in one service scenario. For example, multi-device collaboration includes but is not limited to a projection scenario, an audio projection scenario, a file sharing scenario, and the like. It may be understood that, an application scenario of multi-device collaboration is implemented according to a corresponding collaboration protocol. For example, a projection scenario is implemented according to a projection protocol, an audio projection scenario is implemented according to an audio projection protocol, and a file sharing scenario is implemented according to a file sharing protocol. However, because different devices have different ecosystems, operating system capabilities, or the like, there may be many problems in interconnection and interworking operations between the devices.

For ease of understanding, in the following embodiments, a projection scenario is used as an example to describe the method provided in this application. For other application scenarios of multi-device collaboration, refer to an embodiment of the projection scenario. Details are not described in the following embodiments.

Currently, mainstream projection scenarios include mirroring projection and application projection. For example, the mirror projection may project a display interface of a mobile phone to a large screen for mirror display; and the application projection may project video data of a video application included in the mobile phone to the large screen for video display. Based on different projection scenarios, different types of devices, and the like, there are also a plurality of projection protocols, for example, including but not limited to miracast (a wireless display standard based on Wi-Fi Direct), cast+ (a projection protocol), dmsdp (a projection protocol), google cast (a projection dedicated protocol), Lebocast^{®}, and AirPlay^{®} (a projection protocol). Due to the ecosystems and operating systems of the devices, projection protocols supported by the devices from different vendors may be different or not exactly the same. It may be understood that when a target device (for example, a receiver that can receive projection data in a projection scenario) cannot support a projection protocol used in a projection manner selected by a source device (for example, an initiator in the projection scenario), a user cannot perform projection or projection fails, causing poor user experience.

In a possible implementation, in a scenario of a mobile phone and a large screen that support a same system and a same distributed capability, after the mobile phone is bound to the large screen, in a scenario in which a user plays content on the mobile phone, the mobile phone may be connected to the large screen through a distributed soft bus. The mobile phone being bound to the large screen may be understood as that when the mobile phone and the large screen need to establish a connection for multi-device collaboration for the first time, the mobile phone and the large screen perform mutual authentication, and a binding relationship between the mobile phone and the large screen may be stored after the authentication succeeds. In this way, when the mobile phone and the large screen need to establish a connection for multi-device collaboration again, authentication may not be performed again. Since the large screen offers a superior viewing experience, the user may be prompted on the mobile phone whether to perform playing hopping. When the user agrees to perform hopping, the mobile phone may send a hopping instruction to the large screen through the distributed soft bus, so that content on the mobile phone can be played on the large screen, and a playing control interface can be displayed on the mobile phone. It may be understood that, in this implementation, a prompt operation of whether to perform content playing hopping may be actively sent to the user via an interface. However, this implementation cannot resolve a problem that projection cannot be implemented when a source device and a target device use different projection protocols.

In view of this, embodiments of this application provide a guiding method. In the method, a target device may determine, based on a discovery packet of a source device, an operation intention of the source device and a collaboration capability supported by the source device. Then, the target device may select one or more collaboration manners based on the collaboration capability supported by the source device and a collaboration capability supported by the target device. In addition, the target device may provide, for a user based on the selected one or more collaboration manners, a one-page or multi-page guide interface used to implement collaboration; or the target device may send the selected one or more collaboration manners to the source device, and the source device provides, for a user based on the selected one or more collaboration manners, a one-page or multi-page guide interface used to implement collaboration. Therefore, according to the method, the source device and the target device do not need to have a binding relationship, and the source device and the target device do not need to negotiate in advance. The binding relationship between the source device and the target device may be understood as a relationship stored after the mobile phone and the large screen are bound. A collaboration capability supported by both the source device and the target device is selected based on a sensing capability of the target device, the collaboration capability of the source device, and the collaboration capability of the target device. In addition, based on the supported collaboration capability, the user is guided to perform device collaboration in a collaboration manner corresponding to the collaboration capability. In this way, the method can increase a success probability of multi-device collaboration, thereby optimizing user experience.

It may be understood that the source device in embodiments of this application may be a device that has a capability of initiating multi-device collaboration, for example, a mobile phone, a tablet computer, a notebook computer, or even a large screen; and the target device in embodiments of this application may be a device that has a capability of receiving multi-device collaboration, for example, a large screen, a projector, a smart speaker, or even a mobile phone, a tablet computer, or a notebook computer. In addition, a specific type of the source device or the target device is not limited in embodiments of this application. For example, a device to which embodiments of this application may be applied includes but is not limited to a device carrying HarmonyOS^{®}, iOS^{®}, Android^{®}, Microsoft^{®}, or another operating system.

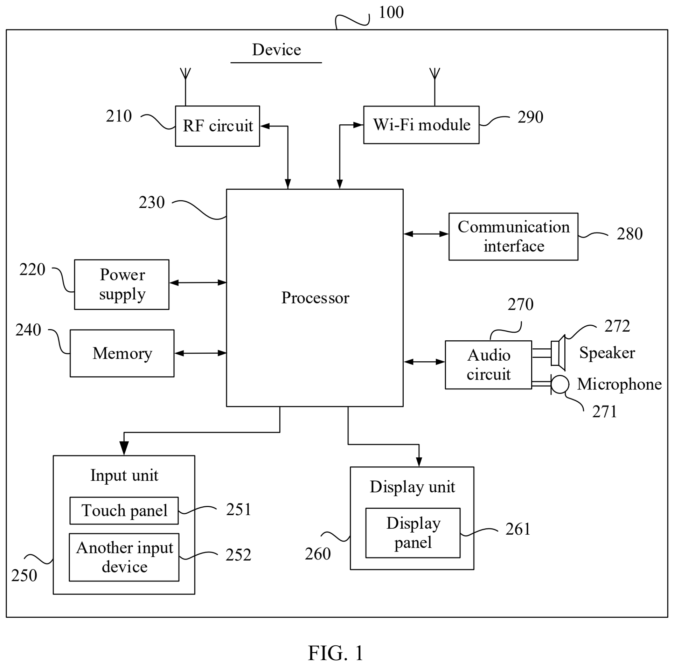

FIG. 1 is a diagram of a possible hardware structure of a device. The device 100 includes components such as a radio frequency (radio frequency, RF) circuit 210, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that the hardware structure of the device 100 shown in FIG. 1 does not constitute a limitation on the device 100. The device 100 provided in this embodiment of this application may include more or fewer components than those shown in the figure, or a combination of two or more components, or different component configurations. The components shown in FIG. 1 may be implemented in hardware, software, or a combination of hardware and software including one or more signal processing and/or application-specific integrated circuits.

The following specifically describes each constituent component of the device 100 in detail with reference to FIG. 1.

The RF circuit 210 may be configured to: receive and send data in a communication or call process. Specifically, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), and a duplexer.

In addition, the RF circuit 210 may communicate with another device through a wireless communication network. The wireless communication may use any communication standard or protocol, including but not limited to global system for mobile communications (global system for mobile communications, GSM), general packet radio service (general packet radio service, GPRS), and code division multiple access (code division multiple access, CDMA), wideband code division multiple access (wideband code division multiple access, WCDMA), long term evolution (long term evolution, LTE), 5G, email, short messaging service (short messaging service, SMS), and the like.

A Wi-Fi technology belongs to a short-range wireless transmission technology. The device 100 may be connected to an access point (access point, AP) through the Wi-Fi module 290, to implement access to a data network. The Wi-Fi module 290 may be configured to: receive and send data in a communication process.

The device 100 may be physically connected to another device through the communication interface 280. Optionally, the communication interface 280 is connected to a communication interface of the another device through a cable, to implement data transmission between the device 100 and the another device.

The device 100 can further implement a communication service and interact with a service side device or another device. Therefore, the device 100 needs to have a data transmission function, that is, the device 100 needs to include a communication module inside. Although FIG. 1 shows communication modules such as the RF circuit 210, the Wi-Fi module 290, and the communication interface 280, it may be understood that the device 100 includes at least one of the foregoing components or another communication module (for example, a Bluetooth module) configured to implement communication, for data transmission.

For example, when the device 100 is a mobile phone, the communication module included in the device 100 may include the RF circuit 210, and may further include the Wi-Fi module 290, or may include a Bluetooth module (not shown in FIG. 1). When the device 100 is a tablet computer, the communication module included in the device 100 may include the Wi-Fi module, or may include a Bluetooth module (not shown in FIG. 1). In embodiments of this application, when the device 100 is a mobile phone, the device 100 may communicate with a large screen through a communication module like the RF circuit 210 or the Wi-Fi module 290. For example, when detecting a projection operation of a user, the mobile phone may send a discovery packet through a communication module like the RF circuit 210 or the Wi-Fi module 290 in response to the projection operation, and the large screen may receive, through a communication module like the RF circuit 210 or the Wi-Fi module 290, the discovery packet sent by the mobile phone. For another example, when the mobile phone and the large screen may perform multi-device collaboration according to the guiding method provided in embodiments of this application, the mobile phone may send collaboration data to the large screen through a communication module like the RF circuit 210 or the Wi-Fi module 290. Similarly, the large screen may receive, through a communication module like the RF circuit 210 or the Wi-Fi module 290, the collaboration data sent by the mobile phone.

The memory 240 may be configured to store a software program and a software module. The processor 230 runs the software program and the software module stored in the memory 240, to perform various function applications of the device 100 and process data. Optionally, the memory 240 may mainly include a program storage area and a data storage area. The program storage area may store an operating system (mainly including software programs or software modules respectively corresponding to a kernel layer, a system layer, an application framework layer, an application layer, and the like). In addition, the memory 240 may include a high-speed random access memory, and may further include a nonvolatile memory, for example, at least one magnetic disk storage device, a flash memory device, or another volatile solid-state storage device. In embodiments of this application, when the device 100 is a large screen, a projection protocol supported by the large screen may be stored in the memory 240. For example, the projection protocol stored in the memory 240 of the large screen may include miracast, cast+, and dmsdp.

The input unit 250 may be configured to: receive editing operations of a plurality of different types of data objects such as digit or character information input by a user, and generate a button signal input related to a user setting and function control of the device 100. Optionally, the input unit 250 may include a touch panel 251 and another input device 252.

The touch panel 251, also referred to as a touchscreen, may collect a touch operation performed by the user on or near the touch panel (for example, an operation performed by the user on the touch panel 251 or near the touch panel 251 by using any proper object or accessory such as a finger or a stylus), and drive a corresponding connection apparatus based on a preset program. In embodiments of this application, the touch panel 251 may collect a user operation performed by the user on or near the touch panel 251. For example, when the device 100 is a mobile phone, the mobile phone may collect, via the touch panel 251, an operation indicating to trigger projection, and the like. For another example, when the device 100 is a large screen, on a guide interface provided by the large screen for the user, the device 100 may collect, via the touch panel 251, a user operation performed by the user according to guidance of the large screen. For example, the user determines to use a projection manner provided by the large screen on the guide interface.

Optionally, the another input device 252 may include but is not limited to one or more of a physical keyboard, a function button (for example, a volume control button or an on/off button), a mouse, a joystick, and the like.

The display unit 260 may be configured to display information input by the user, information provided for the user, and various menus of the device 100. The display unit 260 is a guide system of the device 100, and is configured to present an interface and implement human-machine interaction. The display unit 260 may include a display panel 261. For example, the display unit 260 may be a display. In embodiments of this application, the display unit 260 may be configured to display display content in the method provided in this application. For example, when the device 100 is a large screen, the display unit 260 may be configured to display a guide interface, or may be configured to display projection data from a mobile phone in a scenario in which the large screen and the mobile phone can perform multi-device collaboration. For another example, when the device 100 is a mobile phone, the display unit 260 may be configured to display video data that is being played on the mobile phone, and may further display a control used by the user to project the video data, and the like.

The processor 230 is a control center of the device 100, connects to the components through various interfaces and lines, and runs or executes the software program and/or the software module stored in the memory 240 and invokes data stored on the memory 240, to perform various functions of the device 100 and process data, and implement a plurality of services that are based on the device 100. In embodiments of this application, the processor 230 may be configured to implement the method provided in embodiments of this application.

The device 100 further includes the power supply 220 (such as a battery) configured to supply power to the components. Optionally, the power supply 220 may be logically connected to the processor 230 by using a power management system, to implement functions such as charge management, discharge management, and power consumption management by using the power management system.

As shown in FIG. 1, the device 100 further includes an audio circuit 270, a microphone 271, and a loudspeaker 272, and may provide an audio interface between the user and the device 100. The audio circuit 270 may be configured to: convert audio data into a signal that can be identified by the loudspeaker 272, and transmit the signal to the loudspeaker 272. The loudspeaker 272 converts the signal into a sound signal for output. The microphone 271 is configured to: collect an external sound signal (for example, a sound of person speaking, or another sound), convert the collected external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210 for sending to, for example, another device, or output the audio data to the memory 240 for subsequent processing.

Although not shown, the device 100 may further include a camera, at least one sensor, and the like. Details are not described herein again. The at least one sensor may include but is not limited to an acceleration sensor, a distance sensor, a fingerprint sensor, a touch sensor, a temperature sensor, and the like.

Alternatively, the device 100 may further include a graphics processing unit (graphics processing unit, GPU). The GPU may be configured to implement image rendering.

An operating system (operating system, OS) in embodiments of this application is most basic system software running on the device 100. A software system of the device 100 may use a layered architecture, an event-driven architecture, a microkernel architecture, a microservice architecture, or a cloud architecture. In embodiments of this application, an operating system with a layered architecture is used as an example to describe the software structure of the device 100.

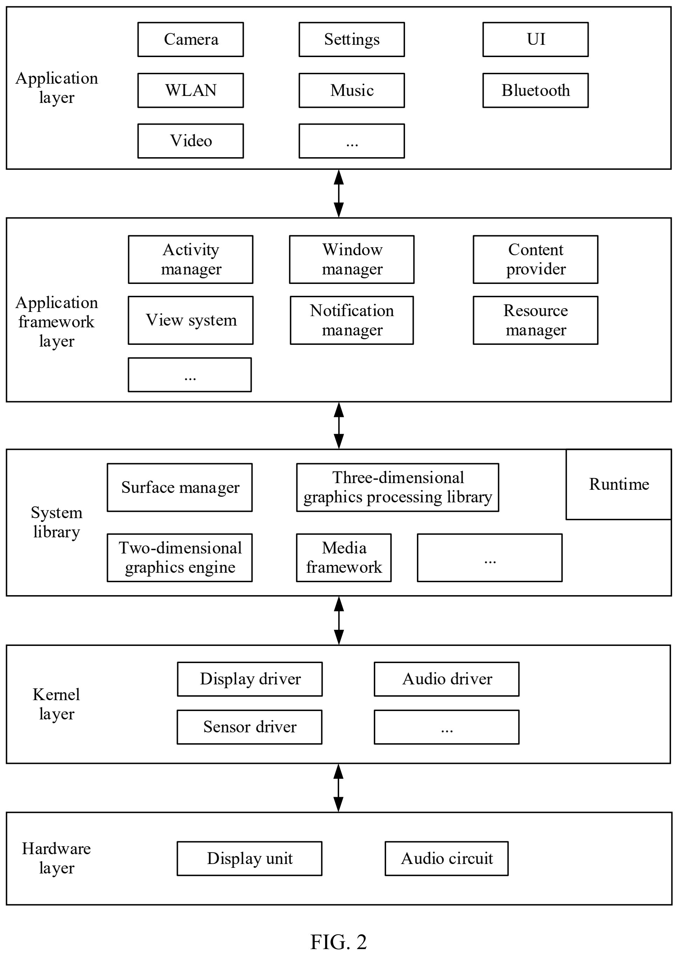

FIG. 2 is a block diagram of a software structure of a device according to an embodiment of this application. As shown in FIG. 2, the software structure of the device may be a layered architecture. For example, software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 2, the application layer may include Camera, Setting, User Interface (user interface, UI), Wireless Local Area Network (wireless local area network, WLAN), Music, Bluetooth, Video, and the like.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 2, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, and the like.

The view system includes visual controls such as a control for displaying a text and a control for displaying an image. The view system may be configured to construct an application. A display interface may include one or more views. For example, the view includes a view for displaying a text and a view for displaying an image.

The resource manager provides various resources such as a localized character string, an icon, an image, a layout file, and a video file for an application.

The notification manager enables an application to display notification information in a status bar, and may be configured to convey a message of a notification type. The message may automatically disappear after a short stay without a user interaction. For example, the notification manager is configured to notify download completion, give a message notification, and the like. The notification manager may alternatively be a notification that appears in a top status bar of the system in a form of a graph or a scroll bar text, for example, a notification of an application running in the background, or may be a notification that appears on a screen in a form of a dialog window.

A runtime includes a core library and a virtual machine. The runtime is responsible for scheduling and management of the operating system.

The core library includes two parts: a function that needs to be invoked in the Java language, and a core library of the operating system. The application layer and the application framework layer run in the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), a two-dimensional graphics engine (for example, SGL), and the like.

The surface manager is configured to manage a display subsystem and provide fusion of 2D and 3D layers for a plurality of applications.

The media framework supports playback and recording of audios and videos in a plurality of commonly used formats, static image files, and the like. The media framework may support a plurality of audio and video coding formats such as MPEG-4, H.264, MP3, and the like.

The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional motion image, and the two-dimensional graphics engine may be configured to draw a two-dimensional motion image.

The kernel layer is a layer between hardware and software. The kernel layer includes at least a display driver, an audio driver, and a sensor driver.

The hardware layer may include a display unit, an audio circuit, and the like.

Usually, the device 100 may run a plurality of applications at the same time. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one of a, b, or c may represent a, b, c, a and b, a and c, b and c, or a, b, and c, where a, b, and c may be singular or plural. "A plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects before and after the character.

In addition, it should be understood that in descriptions of this application, terms such as "first" and "second" are merely used for distinguishing and description, but should not be understood as indicating or implying relative importance, or should not be understood as indicating or implying a sequence.

It should be understood that the hardware structure of the device may be shown in FIG. 1, and the software system architecture of the device may be shown in FIG. 2. A software program and/or module corresponding to the software system architecture of the device may be stored in the memory 240. The processor 230 may run the software program and an application stored in the memory 240, to perform a procedure of the guiding method provided in embodiments of this application.

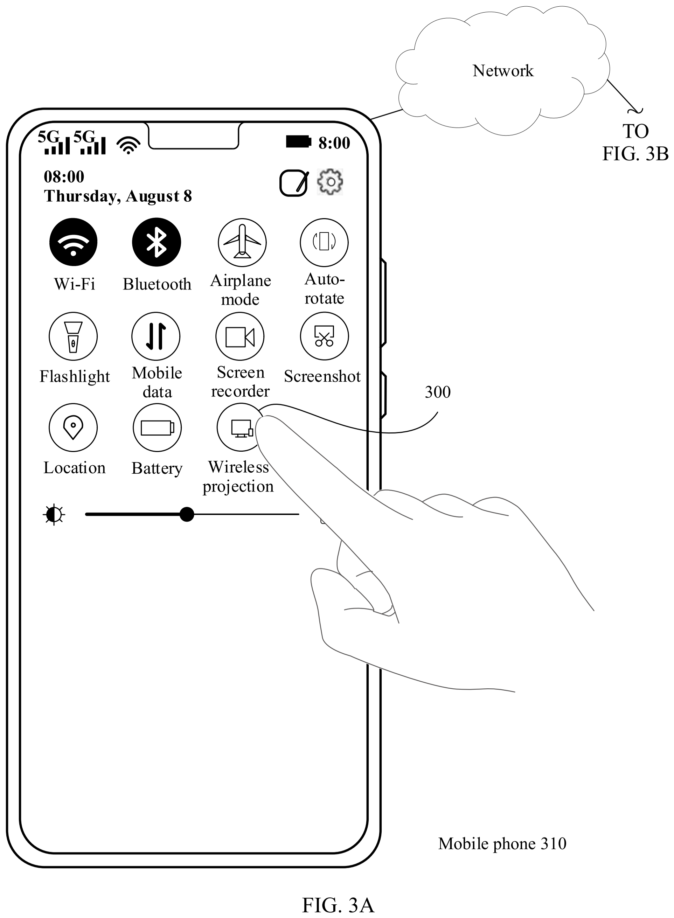

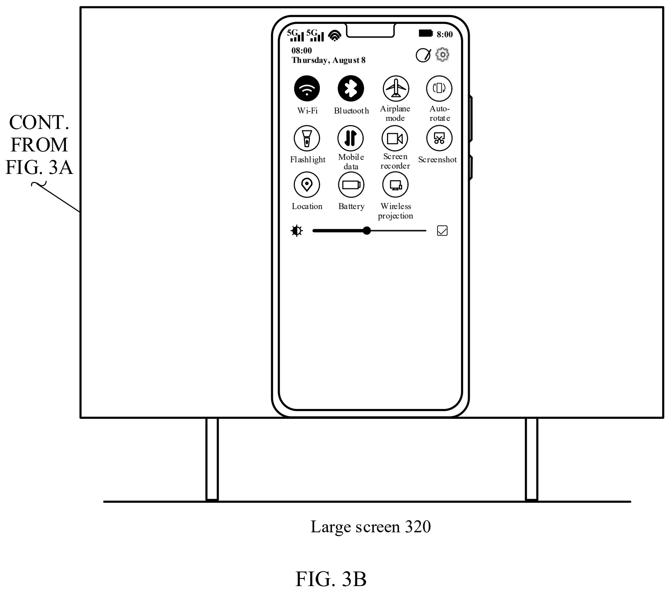

To facilitate understanding of the guiding method provided in this application, the following describes an implementation process of the method provided in this application with reference to content shown in FIG. 3A and FIG. 3B to FIG. 9.

The method provided in embodiments of this application may be applied to a multi-device interconnection and interworking scenario, and may be used by a plurality of devices to perform multi-device collaboration, providing better device use experience. For ease of understanding, in the following embodiments, a projection scenario is used as an example in a multi-device collaboration scenario. FIG. 3A and FIG. 3B are a diagram of an application scenario of a projection operation. The application scenario may include at least a mobile phone 310 and a large screen 320. In a scenario in which a display interface of the mobile phone 310 is projected onto the large screen 320, a user may trigger a projection scenario through an operation of tapping, in a pull-down notification interface of the mobile phone 310, an icon 300 used for wireless projection. In response to the touch operation performed by the user on the icon 300, the mobile phone 310 may trigger a projection operation according to a projection protocol (assumed as a projection protocol 1) corresponding to the icon 300. In a possible application scenario, when the large screen 320 may also support the projection protocol 1, the large screen 320 may be scanned by the mobile phone 310, so that a display interface of the mobile phone 310 can be projected onto the large screen 320. For example, the display interface of the mobile phone 310 may be displayed on a display of the large screen 320 in FIG. 3A and FIG. 3B.

In another possible application scenario, when the large screen 320 in FIG. 3A and FIG. 3B does not support the projection protocol 1, the large screen 320 may not be scanned by the mobile phone 310, or even if the large screen 320 is scanned, a projection failure may occur. According to the method provided in embodiments of this application, the user may be guided, via a one-page or multi-page guide interface, to implement successful projection in this scenario. The guiding method provided in embodiments of this application may also include one or more possible application scenarios, and may include but is not limited to the following scenario A to scenario D.

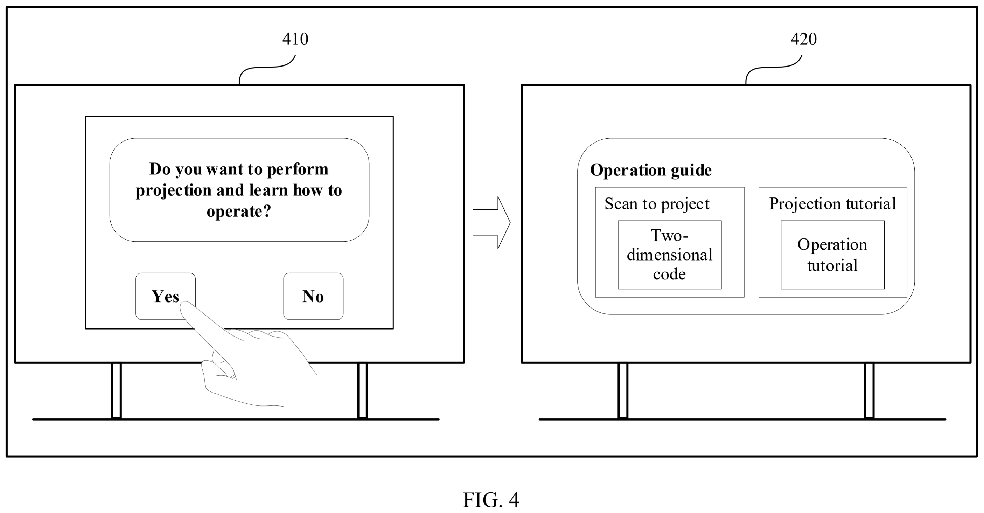

Scenario A: FIG. 4 is a diagram of an application scenario of a guiding method according to an embodiment of this application. In this application scenario, the large screen 320 may display an interface 410. The interface 410 may include a prompt box, and the prompt box indicates another projection protocol that can be used by the user to implement projection. As shown in the user interface 410, the prompt box may include but is not limited to prompt information such as "Do you want to perform projection and learn how to operate?", a "Yes" control, and a "No" control. The another projection protocol may be understood as a projection protocol supported by both the mobile phone 310 and the large screen 320, for example, a projection protocol 2. Alternatively, the another projection protocol may be understood as a projection protocol that is convenient for user operation. For example, although the mobile phone 310 does not support a projection protocol 3, the projection protocol 3 may be implemented by downloading a corresponding application (application, APP).

In a possible embodiment, when detecting a touch operation performed by the user on the "Yes" control in the interface 410, the large screen 320 may display an interface 420 in response to the touch operation. The interface 420 may include an operation guide box, and the operation guide box may indicate, to the user, how to implement projection in a projection manner corresponding to the another projection protocol. As shown in the user interface 420, the operation guide box may include but is not limited to: a two-dimensional code used to implement scan-to-project, a projection tutorial including an operation tutorial, and the like. The operation tutorial may indicate how to implement projection through a user operation. It may be understood that, when the large screen 320 detects a touch operation performed by the user on the "No" control in the interface 410, the large screen 320 may display a home screen, a playing interface, or the like of the large screen in response to the touch operation.

Based on the two-dimensional code provided in the interface 420 in FIG. 4, the user may be guided to perform a code scanning operation via the mobile phone 310. It may be understood that the mobile phone 310 may identify content corresponding to the two-dimensional code in response to the code scanning operation. For example, after identifying the content corresponding to the two-dimensional code, the mobile phone 310 may directly project the display interface of the mobile phone 310 onto the large screen 320. For another example, after identifying the content corresponding to the two-dimensional code, the mobile phone 310 may also display an interface used to implement projection. The interface may be used to guide the user to project the display interface of the mobile phone 310 onto the large screen 320.

In addition, the large screen 320 may further collect and collect statistics on user operations performed by the user in the interface 410, and analyze a user preference based on a statistical result, so that guidance may be performed based on the user preference. For example, when the large screen 320 analyzes that the user preference is to perform projection and learn how to operate, the large screen 320 may directly display the interface 420 when a projection scenario of the user is detected next time and guidance is required, so that user operations can be simplified. For another example, when the large screen 320 analyzes that the user preference is not to perform projection and learn how to operate, even if a projection scenario of the user is detected next time and guidance is required, the interface 410 and the interface 420 are not displayed to the user, thereby avoiding poor user experience.

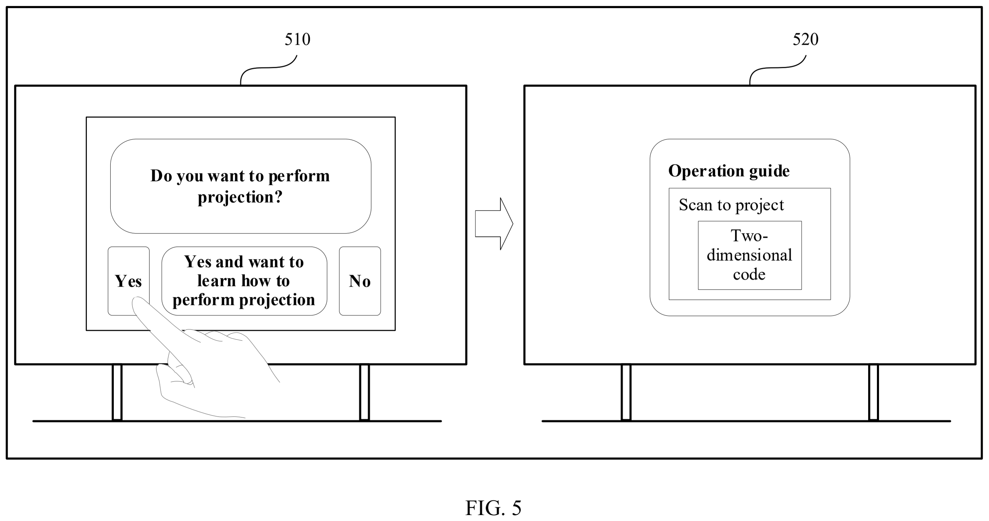

It should be noted that the interface 410 is merely a possible example. A style of the prompt box is not limited in embodiments of this application. For example, the prompt box may be implemented via a notification message, voice playing, or the like, or may be implemented via a combination of a plurality of manners. In another possible embodiment, FIG. 5 is a diagram of another application scenario of a guiding method according to an embodiment of this application. In comparison with the interface 410 in FIG. 4, the prompt box of the interface 510 included in FIG. 5 may include but is not limited to: prompt information about "Do you want to perform projection?", a "Yes" control, a "No" control, and a "Yes and want to learn how to perform projection" control. When detecting a touch operation performed by the user on the "Yes" control, the mobile phone may display an interface 520 in response to the touch operation. In comparison with the interface 420 in FIG. 4, an operation guide box included in the interface 520 may not include a projection tutorial. It may be understood that, when detecting a touch operation performed by the user on the "Yes and want to learn how to perform projection" control, the mobile phone may display the interface 420 shown in FIG. 4 in response to the touch operation. In this case, an operation guide box included in the interface 420 may include not only scan-to-project, but also display content such as a projection tutorial.

It should be further noted that the interface 420 is merely a possible example, and a style and display content of the operation guide box are not limited in embodiments of this application. For example, when the another projection protocol is a projection protocol that is convenient for user operation, the operation guide box displayed in the interface 420 includes a corresponding APP icon for downloading the projection protocol 3; or when guidance is implemented on the mobile phone 310, the operation guide box may further include a control for guiding jumping to an application market. For another example, the operation tutorial in the projection tutorial included in the interface 420 may be in a folded state, a sliding state, or the like.

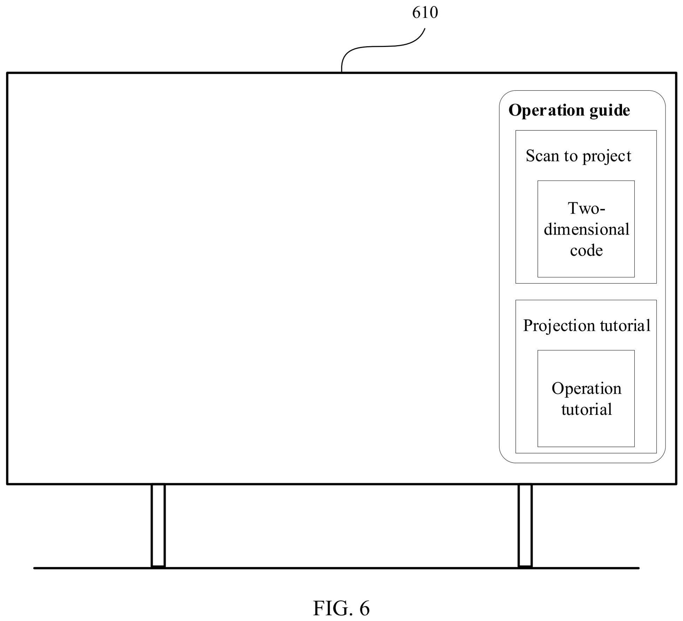

Scenario B: FIG. 6 is a diagram of another application scenario of a guiding method according to an embodiment of this application. In this application scenario, the large screen 320 may display an interface 610. The interface 610 may include an operation guide box, the operation guide box may indicate the operation guide box in the interface 420 shown in FIG. 4, and the operation guide box may indicate, to the user, how to implement projection by using another projection method. With reference to FIG. 4 and FIG. 6, it can be learned that the operation guide box in the interface 610 may be displayed on one side of the large screen 320. In addition, in comparison with the scenario shown in FIG. 4, in the scenario shown in FIG. 6, the operation guide box may be directly superimposed and displayed on the one side of the large screen 320. In comparison with an implementation in FIG. 4 in which the "Yes" control or the "No" control needs to be tapped in the interface 410, in this scenario, user operations can be reduced, and blocking impact on a playing interface of the large screen 320 can be reduced by displaying the control on the one side of the large screen 320.

In a possible embodiment, when the large screen 320 detects a sliding operation performed by the user on the operation guide box in the interface 610 toward a side of a screen, the large screen 320 may not display the operation guide box in the interface 610 in response to the sliding operation.

Alternatively, in another possible embodiment, display duration may be preset for the operation guide box in the interface 610, and the display duration may be, for example, 5 seconds or 10 seconds. For example, timing starts from display of the operation guide box, and when the specified display duration expires, the operation guide box may not be displayed anymore. Therefore, this embodiment reduces user operations and avoids prolonged obstruction of a display picture of the large screen 320. In addition, the display duration may also be manually set by the user on a display interface like a setting interface.

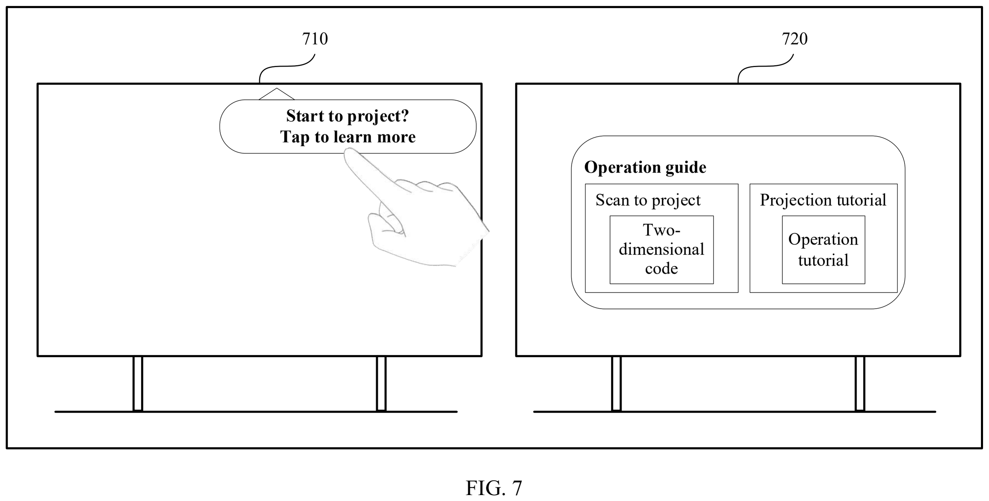

Scenario C: FIG. 7 is a diagram of still another application scenario of a guiding method according to an embodiment of this application. In this application scenario, the large screen 320 may display an interface 710. The interface 710 may include a prompt box whose style is different from that of the prompt box in FIG. 4, and the prompt box may also indicate another projection protocol that can be used by the user to implement projection. As shown in the user interface 710, the prompt box may include but is not limited to prompt information such as "Do you want to perform projection and learn how to operate?". With reference to FIG. 4 and FIG. 6, it can be learned that the prompt box in the interface 710 may be displayed on the top of the large screen 320. In addition, in comparison with the scenario shown in FIG. 4, in the scenario shown in FIG. 7, the prompt box may be directly superimposed and displayed on the top of the large screen 320.

In a possible embodiment, when the large screen 320 detects a first touch operation performed by the user on the prompt box in the interface 710, the large screen 320 may display an interface 720 in response to the first touch operation. For example, the first touch operation may be, for example, a tap operation or a touch and hold operation. The interface 720 may include an operation guide box, and the operation guide box may indicate, to the user, how to implement projection in a projection manner corresponding to the another projection protocol. As shown in the user interface 720, the operation guide box may include but is not limited to a two-dimensional code used to implement scan-to-project, a projection tutorial, and the like. In another possible embodiment, when the large screen 320 detects a second touch operation performed by the user on the prompt box in the interface 710, the large screen 320 may not display the prompt box in the interface 710 in response to the second touch operation. The second touch operation may be, for example, an operation of sliding toward a side of a screen.

Alternatively, in another possible embodiment, display duration may be preset for the prompt box in the interface 710. For example, timing starts from display of the prompt box, and when the specified display duration expires, the prompt box may not be displayed anymore. Therefore, this embodiment reduces user operations and avoids prolonged obstruction of a display picture of the large screen 320.

Scenario D: In the embodiments shown in FIG. 4 to FIG. 7, in addition to guidance implemented on the large screen 320, guidance may also be implemented on the mobile phone 310, thereby improving convenience of a user operation. For a specific implementation scenario, refer to the description content in the foregoing scenario A to scenario C. Details are not described herein again.

Based on the foregoing description content of interface processing effect that can be achieved by using the method provided in embodiments of this application, the following describes an implementation process of the guiding method provided in this application, to describe how to use the method provided in this application to achieve the interface processing effect shown in FIG. 4 to FIG. 7 described above.

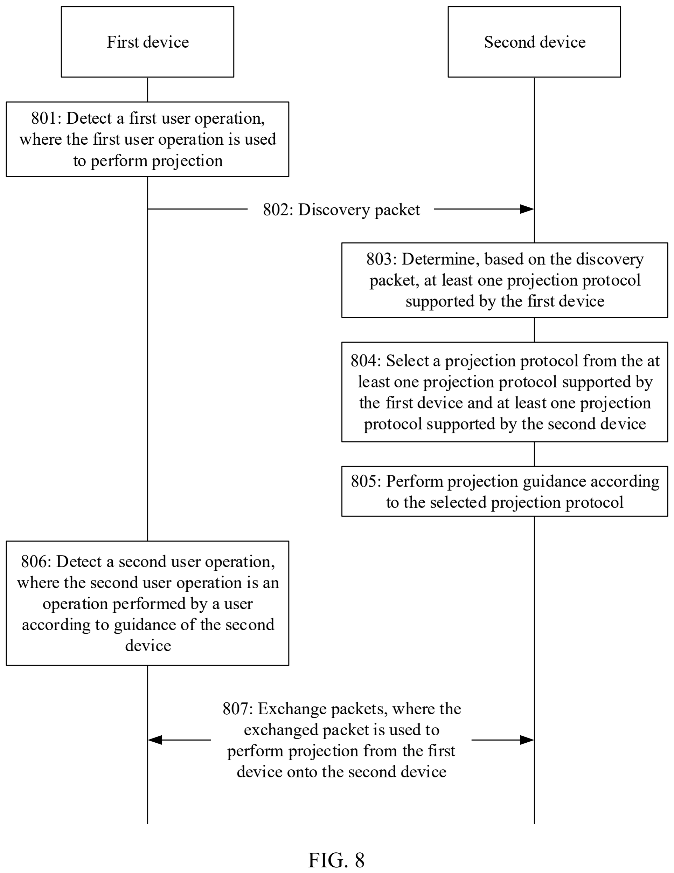

In a possible embodiment, FIG. 8 is a schematic flowchart of a guiding method according to an embodiment of this application. The method may be applied to a second device, and the procedure may include the following steps.

Step 801: A first device detects a first user operation, where the first user operation is used to perform projection. The first device may be, for example, the source device described in the foregoing embodiment, for example, the mobile phone 310 described in scenario A to scenario D. For example, as shown in FIG. 3A and FIG. 3B, the first user operation may be, for example, a touch operation performed by a user on the icon 300.

Step 802: The first device sends a discovery packet in response to the first user operation. The discovery packet may be used by the first device to discover another nearby device, and may indicate a projection intention of the first device. For example, the projection intention may be initiating projection according to a projection protocol 1. The discovery packet may further include at least one projection protocol supported by the first device. In a possible embodiment, the first device may send the discovery packet through a connection such as Bluetooth or Wi-Fi. A connection manner in which the first device sends the discovery packet is not limited in embodiments of this application.

Step 803: The second device determines, based on the discovery packet, the at least one projection protocol supported by the first device. The second device may be, for example, the target device described in the foregoing embodiment, for example, the large screen 320 described in scenario A to scenario D.

In a possible embodiment, the second device may receive a discovery packet from a nearby device in real time. In this way, after the first device sends the discovery packet, the second device may receive the discovery packet sent by the first device. It should be noted that a quantity of discovery packets that can be received by the second device is not limited in embodiments of this application. For example, the second device may receive a discovery packet from a source device 1, or may receive a discovery packet from a source device 2.

In an optional embodiment, the second device may determine, according to step 803, the at least one projection protocol supported by the first device, and the second device may store at least one projection protocol supported by the second device. Therefore, when it is determined that the second device does not support the projection protocol 1 supported by the first device in the projection intention, step 804 may continue to be performed, to select another projection protocol and guide the user to implement successful projection in a projection manner corresponding to the another projection protocol. In another optional embodiment, the second device may continue to perform step 804 when detecting that projection performed with the first device according to the projection protocol 1 fails. That the second device detects that the projection fails may be indicated by the first device to the second device, or may be detected by the second device. In still another optional embodiment, the second device may continue to perform step 804 when detecting that projection performed with the first device according to the projection protocol 1 succeeds, to determine whether there is a better projection protocol, so as to improve user experience. Alternatively, it may be understood that the second device may not continue to perform the following step 804 when detecting that projection performed with the first device according to the projection protocol 1 succeeds, to avoid impact on a scenario in which the projection succeeds.

Step 804: The second device selects a projection protocol from the at least one projection protocol supported by the first device and the at least one projection protocol supported by the second device.

In an optional embodiment, the first device supports the projection protocol 1 and a projection protocol 2, and the second device supports the projection protocol 2 and a projection protocol 3. When the first device detects, in step 801, that the projection protocol 1 is used for projection, the discovery packet sent by the first device in step 802 may indicate that the operation intention of the first device is to perform projection in a projection manner corresponding to the projection protocol 1. After the second device receives the discovery packet sent by the first device, the second device determines that the operation intention of the first device is to perform projection according to the projection protocol 1, and determines that the first device supports not only the projection protocol 1, but also the projection protocol 2. In this case, the second device may select the projection protocol 2 supported by both the first device and the second device for projection. Then, the second device may guide the user to perform projection according to the projection protocol 2. For example, a projection manner corresponding to the projection protocol 1 may be mirroring projection. Because the mobile phone and the large screen use different operating systems, the mobile phone cannot implement projection onto the large screen in the mirroring projection manner. A projection manner corresponding to the projection protocol 2 may be application projection. Because the mobile phone and the large screen are connected to same Wi-Fi, the large screen may guide the user to implement projection onto the large screen in the application projection manner.

In another optional embodiment, the first device supports the projection protocol 1 and a projection protocol 2, and the second device supports a projection protocol 3 and a projection protocol 4. When the first device detects, in step 801, that the projection protocol 1 is used for projection, the discovery packet sent by the first device in step 802 may indicate that the operation intention of the first device is to perform projection in a projection manner corresponding to the projection protocol 1. After the second device receives the discovery packet sent by the first device, the second device determines that the operation intention of the first device is to perform projection according to the projection protocol 1, and determines that the first device supports not only the projection protocol 1 but also the projection protocol 2, and that the second device supports the projection protocol 3 and the projection protocol 4. Because the first device and the second device do not have a same projection protocol, the second device may select one projection protocol from the projection protocol 3 and the projection protocol 4, to guide the user to perform projection according to the selected projection protocol. For example, a projection manner corresponding to the projection protocol 1 may be mirroring projection. Because the mobile phone and the large screen use different operating systems, the mobile phone cannot implement projection onto the large screen in the mirroring projection manner. A projection manner corresponding to the projection protocol 2 may be application projection. Because the mobile phone and the large screen are not connected to same Wi-Fi, the mobile phone cannot implement projection onto the large screen in the application projection manner. A projection manner corresponding to the projection protocol 3 is using a projection APP. When the projection protocol 3 is selected by the large screen, the large screen may guide the user to download the projection APP on the mobile phone, so that the projection APP can be used to implement projection onto the large screen.

In the foregoing embodiment, the large screen may select the projection protocol based on one or more of factors such as user operation complexity and use experience of the projection protocol.

Step 805: The second device performs projection guidance according to the selected projection protocol. For example, the projection guidance may be the interface 410 and the interface 420 shown in FIG. 4. For another example, the projection guidance may be the interface 510 and the interface 520 shown in FIG. 5. Alternatively, for example, the projection guidance may be the interface 610 shown in FIG. 6. Alternatively, for example, the projection guidance may be the interface 710 and the interface 720 shown in FIG. 7. It may be understood that, in a process of performing projection guidance, the second device may also detect a user operation, for example, a touch operation performed by the user on the "Yes" control in the interface 410, or a touch operation performed by the user on the prompt box in the interface 710.

In a possible embodiment, the second device may collect touch operations in a projection guidance process, and collect statistics on and analyze the touch operations to obtain a user preference, so that a next projection guidance manner can be set based on the user preference. For example, when the second device learns, through analysis, that the user preference is to accept a projection protocol selected by the second device, when a projection scenario of the user is detected next time and guidance is required, it may be considered by default that the user accepts the projection protocol selected by the second device, and an operation guide box is directly displayed to the user without user feedback. For example, the interface 420 shown in FIG. 4 is directly displayed, and the interface 410 shown in FIG. 4 is not displayed, so that user operations can be simplified. For another example, when the second device learns, through analysis, that the user preference is not to accept a projection protocol selected by the second device, it may be considered by default that the user rejects the projection protocol selected by the second device, and a guide interface is not provided for the user, thereby avoiding poor user experience.

It should be noted that an implementation of projection guidance is not limited in embodiments of this application. For example, the projection guidance may be implemented via at least one of a guide interface, a prompt box interface, a notification interface, a voice, and the like.

Step 806: The first device detects a second user operation, where the second user operation is an operation performed by the user according to guidance of the second device. For example, when the guidance of the second device is the interface 420 shown in FIG. 4, the second user operation that can be detected by the first device may be a code scanning operation. For another example, when the guidance of the second device is downloading the projection APP, the second user operation that can be detected by the first device may be a downloading operation for the projection APP.

Step 807: The first device exchanges packets with the second device, where the exchanged packet is used to perform projection from the first device onto the second device. For example, the exchanged packet may be used to establish a projection connection between the first device and the second device. For example, the exchanged packet may be used by the second device to access a same Wi-Fi network as the first device. Alternatively, when the first device establishes a projection connection to the second device according to step 806, the exchanged packet may be to-be-projected data or the like.

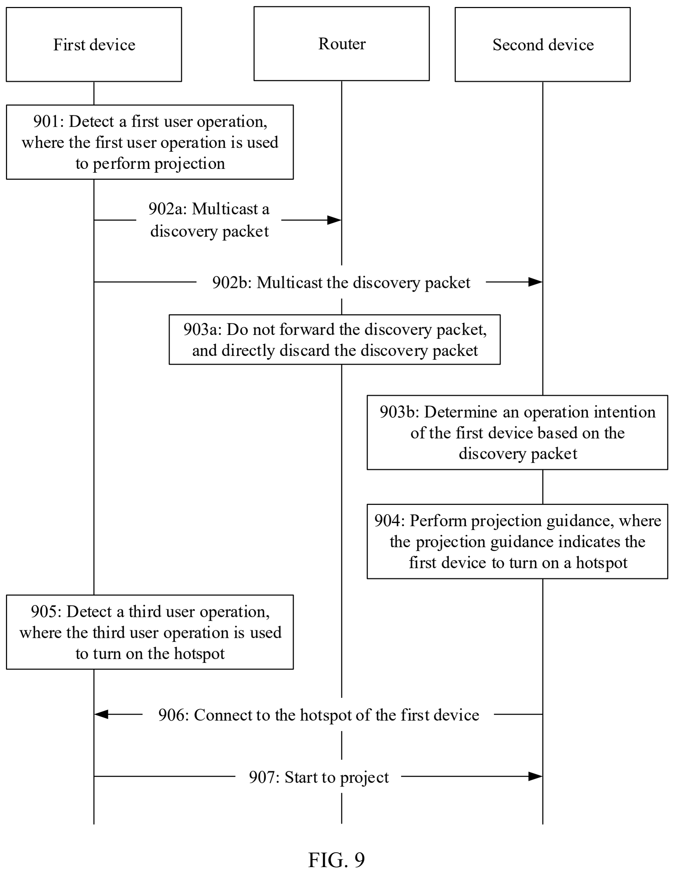

In another possible embodiment, FIG. 9 is a schematic flowchart of a guiding method according to an embodiment of this application. The method may be applied to a scenario in which a first device uses digital living network alliance (digital living network alliance, DLNA) projection, and the procedure may include the following steps.

Step 901: A first device detects a first user operation, where the first user operation is used to perform projection. The first device may be, for example, the source device described in the foregoing embodiment, for example, the mobile phone 310 described in scenario A to scenario D. For example, as shown in FIG. 3A and FIG. 3B, the first user operation may be, for example, a touch operation performed by a user on the icon 300.

Step 902a: A router receives a discovery packet that is multicast by the first device. A discovery process for DLNA projection is performed based on a local area network CoAP protocol, and a CoAP packet belongs to a multicast packet.

Step 903a: The router does not forward the discovery packet, and directly discards the discovery packet. Processing policies of some routers may include restricting forwarding of the multicast packet. Consequently, the first device cannot discover a second device for projection, and projection cannot be performed from the first device onto the second device.

Step 902b: The second device receives the discovery packet that is multicast by the first device. In embodiments of this application, the second device may be configured with a capability of receiving a layer 2 packet. Therefore, the second device may receive the discovery packet sent by the first device in a multicast manner, and does not need to rely on forwarding by the router.

Step 903b: The second device determines an operation intention of the first device based on the discovery packet. It may be understood that, based on content of step 901, it may be determined that the operation intention of the first device is to perform projection.

Step 904: The second device performs projection guidance, where the projection guidance indicates the first device to turn on a hotspot. It may be understood that content of a projection tutorial displayed on a guide interface of the second device in this scenario may be prompt information "Please turn on hotspot".

Step 905: The first device detects a third user operation, where the third user operation is used to turn on the hotspot. It may be understood that the user may turn on the hotspot of the first device according to the projection guidance of the second device.

Step 906: The second device connects to the hotspot of the first device. It may be understood that, after performing projection guidance according to step 904, the second device may start a wireless local area scanning process according to the projection guidance, so that the second device can connect to the hotspot of the first device.

Step 907: The first device starts to project a screen onto the second device. It may be understood that, after the second device is connected to the hotspot of the first device, the first device and the second device are in a same local area network, and the first device and the second device may establish a communication connection, so that projection data of the first device may be sent to the second device through the communication connection, thereby implementing projection from the first device onto the second device.

According to the method provided in embodiments of this application, a capability of receiving a discovery packet from another device is configured for a target device, so that the target device can receive a packet sent by a source device, to learn, based on the discovery packet, of an operation intention of multi-device collaboration initiated by the source device. In addition, the target device may further make a decision on a collaboration manner of multi-device collaboration, select a collaboration manner from at least one optional collaboration manner, and perform collaboration guidance based on the selected collaboration manner, to guide a user to implement multi-device collaboration in the selected collaboration manner. Therefore, in the method, cross-ecosystem or cross-operating system multi-device collaboration can be implemented without a binding relationship or pre-negotiation between a plurality of devices, thereby avoiding a multi-device collaboration failure or an inability to collaborate, for example, an inability to project or a projection failure.

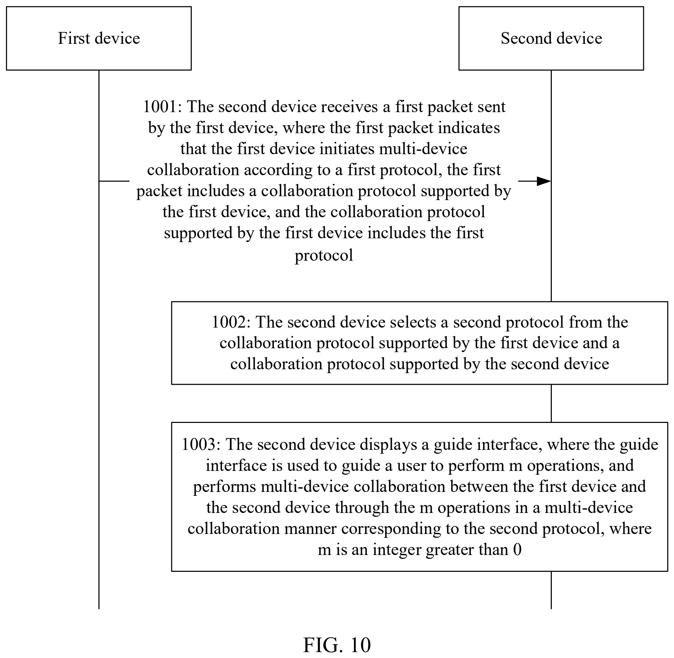

In an optional implementation, FIG. 10 shows an interaction procedure of a guiding method according to an embodiment of this application. The interaction procedure may include the following steps.

Step 1001: A second device receives a first packet sent by a first device, where the first packet indicates that the first device initiates multi-device collaboration according to a first protocol, the first packet includes a collaboration protocol supported by the first device, and the collaboration protocol supported by the first device includes the first protocol.

The first device may be understood as an initiator of the multi-device collaboration, for example, the mobile phone described in the foregoing embodiment. The second device may be understood as a receiver of the multi-device collaboration, for example, the large screen described in the foregoing embodiment. The first packet may be, for example, the discovery packet sent by the first device.

Step 1002: The second device selects a second protocol from the collaboration protocol supported by the first device and a collaboration protocol supported by the second device.

Step 1003: The second device displays a guide interface, where the guide interface is used to guide a user to perform m operations, and performs multi-device collaboration between the first device and the second device through the m operations in a multi-device collaboration manner corresponding to the second protocol, where m is an integer greater than 0. For example, the guide interface may be the interface 410 and the interface 420 shown in FIG. 4. For another example, the guide interface may be the interface 510 and the interface 520 shown in FIG. 5. Alternatively, for example, the guide interface may be the interface 610 shown in FIG. 6. Alternatively, for example, the guide interface may further be the interface 710 and the interface 720 shown in FIG. 7.

Based on the foregoing embodiments, this application further provides a second device. The second device includes a plurality of functional modules, and the plurality of functional modules interact with each other to implement functions performed by the second device in methods described in embodiments of this application. The plurality of functional modules may be implemented based on software, hardware, or a combination of software and hardware, and the plurality of functional modules may be randomly combined or divided based on specific implementation. For example, step 802 to step 805 and step 807 that are performed by the second device in the embodiment shown in FIG. 8 are performed. Alternatively, step 902b, step 903b, step 904, step 906, and step 907 that are performed by the second device in the embodiment shown in FIG. 9 are performed. Alternatively, step 1001 to step 1003 that are performed by the second device in the embodiment shown in FIG. 10 are performed.

Based on the foregoing embodiments, this application further provides a first device. The first device includes a plurality of functional modules, and the plurality of functional modules interact with each other to implement functions performed by the first device in methods described in embodiments of this application. The plurality of functional modules may be implemented based on software, hardware, or a combination of software and hardware, and the plurality of functional modules may be randomly combined or divided based on specific implementation. For example, step 801, step 802, step 806, and step 807 that are performed by the first device in the embodiment shown in FIG. 8 are performed. Alternatively, step 901 to step 902b and step 905 to step 907 that are performed by the first device in the embodiment shown in FIG. 9 are performed.

Based on the foregoing embodiments, this application further provides a second device. The second device includes at least one processor and at least one memory. The at least one memory stores program instructions, and when the second device runs, the at least one processor performs functions performed by the second device in methods described in embodiments of this application. For example, step 802 to step 805 and step 807 that are performed by the second device in the embodiment shown in FIG. 8 are performed. Alternatively, step 902b, step 903b, step 904, step 906, and step 907 that are performed by the second device in the embodiment shown in FIG. 9 are performed. Alternatively, step 1001 to step 1003 that are performed by the second device in the embodiment shown in FIG. 10 are performed.

Based on the foregoing embodiments, this application further provides a first device. The first device includes at least one processor and at least one memory. The at least one memory stores program instructions, and when the first device runs, the at least one processor performs functions performed by the first device in methods described in embodiments of this application. For example, step 801, step 802, step 806, and step 807 that are performed by the first device in the embodiment shown in FIG. 8 are performed. Alternatively, step 901 to step 902b and step 905 to step 907 that are performed by the first device in the embodiment shown in FIG. 9 are performed.

Based on the foregoing embodiments, this application further provides a guide system. The guide system may include the first device and the second device described in the foregoing embodiments.

Based on the foregoing embodiments, this application further provides a program product. The program product includes a program (which may also be referred to as code or instructions). When the program is run, a device or a computer is enabled to perform methods described in embodiments of this application.

Based on the foregoing embodiments, this application further provides a readable storage medium. The readable storage medium stores a program. When the program is executed by a device or a computer, the device or the computer is enabled to perform methods described in embodiments of this application.

Based on the foregoing embodiments, this application further provides a chip. The chip is configured to read a program stored in a memory, to implement methods described in embodiments of this application.

Based on the foregoing embodiments, this application provides a chip system. The chip system includes a processor, configured to support a device in implementing methods described in embodiments of this application. In a possible design, the chip system further includes a memory, and the memory is configured to store necessary programs and data. The chip system may include a chip, or may include a chip and another discrete component. A person skilled in the art should understand that embodiments of this application may be provided as a method, a system or a program product. Therefore, this application may use a form of hardware only embodiments, software only embodiments, or embodiments with a combination of software and hardware.

It is clear that a person skilled in the art may make various modifications and variations to this application without departing from the protection scope of this application. This application is intended to cover these modifications and variations of this application provided that they fall within the scope of protection defined by the following claims and their equivalent technologies.

## Claims

1. A guiding method, comprising:
receiving, by a second device, a first packet sent by a first device, wherein the first packet indicates that the first device initiates multi-device collaboration according to a first protocol, the first packet comprises a collaboration protocol supported by the first device, and the collaboration protocol supported by the first device comprises the first protocol;
selecting, by the second device, a second protocol from the collaboration protocol supported by the first device and a collaboration protocol supported by the second device; and
displaying, by the second device, a guide interface, wherein the guide interface is used to guide a user to perform m operations, and performing multi-device collaboration between the first device and the second device through the m operations in a multi-device collaboration manner corresponding to the second protocol, wherein m is an integer greater than 0.

2. The method according to claim 1, wherein displaying, by the second device, the guide interface comprises:
displaying the guide interface in a sidebar, a notification bar, or a full-screen interface.

3. The method according to claim 1 or 2, wherein selecting, by the second device, the second protocol from the collaboration protocol supported by the first device and the collaboration protocol supported by the second device comprises:
selecting, by the second device, the second protocol from one or more collaboration protocols supported by both the first device and the second device.

4. The method according to claim 1 or 2, wherein the second protocol is a collaboration protocol supported by the second device or a collaboration protocol not supported by the first device; and
the guide interface is used to guide the user to perform the m operations on the first device.

5. The method according to claim 4, wherein the guide interface comprises one or more of the following information: a two-dimensional code used to establish a communication connection between the first device and the second device, and an operation step performed by the user on the first device.

6. The method according to claim 1 or 2, wherein the second protocol is a collaboration protocol supported by the first device or a collaboration protocol not supported by the second device; and
the guide interface is used to guide the user to perform the m operations on the second device.

7. The method according to any one of claims 1 to 6, wherein the method further comprises:
receiving, by the second device, a second packet sent by the first device according to the second protocol, wherein the second packet comprises multi-device collaboration data sent by the first device to the second device.

8. The method according to any one of claims 1 to 7, wherein receiving, by the second device, the first packet sent by the first device comprises:
receiving, by the second device through a Bluetooth connection or a wireless fidelity Wi-Fi connection, the first packet sent by the first device.

9. The method according to any one of claims 1 to 8, wherein before selecting, by the second device, the second protocol from the collaboration protocol supported by the first device and the collaboration protocol supported by the second device, the method further comprises:
determining, by the second device, that the second device does not support the first protocol; or
detecting, by the second device, that multi-device collaboration performed with the first device according to the first protocol fails.

10. A guiding method, comprising:
receiving, by a second device, a first packet sent by a first device, wherein the first packet indicates that the first device initiates digital living network alliance DLNA projection;
displaying, by the second device, a guide interface, wherein the guide interface is used to guide a user to turn on a hotspot of the first device; and
accessing, by the second device, the hotspot of the first device, and performing DLNA projection between the first device and the second device via the hotspot of the first device.

11. A second device, comprising at least one processor, wherein the at least one processor is coupled to at least one memory, and the at least one processor is configured to read a program stored in the at least one memory, so that the second device performs the method according to any one of claims 1 to 9, or performs the method according to claim 10.
